# EUROPEAN PATENT APPLICATION

(11) **EP 2 199 885 A1**
(43) Date of publication of application: **23.06.2010**
(21) Application number: 08172548.3
(22) Date of filing: 22.12.2008
(51) Int. Cl.: G06F 1/16, G06F 3/048

(54) **Portable electronic device and method of controlling same**

(71) Applicant: Research In Motion Limited, Waterloo, Ontario N2L 3W8 (CA)
(72) Inventor: Lee, John Jong-Suk, Thornhill, Ontario L4J 8G4 (CA)
(74) Representative: Hollywood, Jane Constance

(57) **Abstract**

A method of controlling a portable electronic device having a display includes determining a first orientation of the portable electronic device, rendering a second screen on the display for a second orientation of the portable electronic device, and reconfiguring the display by rendering a first screen based on the first orientation of the portable electronic device if the portable electronic device is maintained in the first orientation.

## Description

The present disclosure relates generally to portable electronic devices and rendering of screens including graphical user interfaces.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and ease of portability. Smaller devices are generally desirable for portability. Touch screen devices constructed of a display, such as a liquid crystal display, with a touch-sensitive overlay are useful on such handheld devices as such handheld devices are small and are therefore limited in space available for user input and output devices. Further, the screen content on the touch screen devices can be modified depending on the functions and operations being performed.

Graphical user interfaces including keyboards, for example, can be rendered on such touch screen devices for user interaction. Such keyboards include full keyboards with keys sized to fit the touch screen device. Virtual keyboards provided in portrait orientation suffer from the disadvantage that the keys may be small and therefore difficult to accurately select. While virtual keyboards provided in the landscape orientation with a data display provided above the virtual keyboard may be desirable for typing using the thumbs, the area for data display may be considered small or the aspect ratio may be undesirable.

Improvements in portable electronic devices having touch screen displays are therefore desirable.

### GENERAL

According to one aspect, there may be provided a method of controlling a portable electronic device having a display. The method may comprise determining a first orientation of the portable electronic device, rendering a second screen on the touch screen display for a second orientation of the portable electronic device when the portable electronic device is in the first orientation, and reconfiguring the touch screen display by rendering a first screen based on the first orientation of the portable electronic device if the portable electronic device is maintained in the first orientation.

According to another aspect, there may be provided a portable electronic device. The portable electronic device may comprise a housing, a display connected to the housing, and functional components in the housing comprising an accelerometer, a memory device, and a processor. The processor may be operably connected to the display, the accelerometer, and the memory device for executing a program stored in the memory to cause the portable electronic device to determine a first orientation of the portable electronic device, render a second screen on the touch screen display for a second orientation of the portable electronic device when the portable electronic device is in the first orientation, and reconfigure the display by rendering a first screen based on the first orientation of the portable electronic device if the portable electronic device is maintained in the first orientation.

According to yet another aspect, there may be provided a computer-readable medium having computer-readable code embodied therein for execution by a processor in a portable electronic device comprising a display, for determining a first orientation of the portable electronic device, rendering a second screen on the display for a second orientation of the portable electronic device, and reconfiguring the display by rendering a first screen based on the first orientation of the portable electronic device if the portable electronic device is maintained in the first orientation.

Preferably, the screen such as a keyboard and display area are automatically determined based on the orientation of the device when in use. Thus, the screen provided may be determined based on the orientation. The screen can be reconfigured for providing in an "upright" position depending on the orientation. In the case of a keyboard, for example, the keyboard can be reconfigured for providing a user with a full keyboard or a reduced keyboard as desired. A user need not be held to a landscape or a portrait orientation during use of the device. An alternate screen orientation may be rendered on the portable electronic device prior to rendering the screen associated with the orientation in which the portable electronic device is held. Thus, the alternate screen is first rendered, followed by the screen for the orientation in which the portable electronic device is held. If, on the other hand, the user elects to switch the orientation of the portable electronic device to an alternate orientation within a threshold period of time, the alternate screen may be maintained. The rendering of the alternate screen serves as a reminder to the user of the alternate orientation for use of the portable electronic device and can remind the user each time a screen is rendered or an application is launched in which a screen is rendered. Additional menu screens or options for reorientation of the portable electronic device are unnecessary. The unfamiliar user is provided with the different orientations of screens such as graphical user interfaces including virtual keyboards or other interfaces for data entry so that the desired orientation can be chosen for data entry or display. This obviates the need to view and select from menus, options or settings as well as help or instruction screens for determining capabilities of the device. Thus, the user is saved time and device use time is reduced in determining such capabilities, reducing power consumption and therefore battery use.

### BRIEF DESCRIPTION OF THE DRAWINGS

Embodiments of the present disclosure will now be described, by way of example only, with reference to the attached Figures, wherein:

Figure 1 is a simplified block diagram of components including internal components of a portable electronic device according an aspect of an embodiment;

Figure 2 is a front view of an example of a portable electronic device including a virtual keyboard shown in portrait mode;

Figure 3 is a simplified sectional side view of the portable electronic device of Figure 2 (not to scale), with a switch shown in a rest position;

Figure 4 is a flow chart illustrating a method of controlling the portable electronic device in accordance with an aspect of an embodiment;

Figure 5 is a front view of the example of the portable electronic device including a virtual keyboard shown in a landscape mode;

Figure 6 is a front view of the example of the portable electronic device including the virtual keyboard shown in the landscape mode; and

Figure 7 is a front view of the example of the portable electronic device including the virtual keyboard shown in the portrait mode.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

Reference is first made to the Figures to describe an embodiment of a portable electronic device including a touch screen display and a method of controlling the portable electronic device. The method incldues determining a first orientation of the portable electronic device, rendering a first virtual keyboard and a first data display area on the touch screen display based on the first orientation of the portable electronic device, automatically detecting a change from the first orientation to a second orientation of the portable electronic device, and reconfiguring the touch screen display by rendering a second virtual keyboard, a second data display area, and data previously displayed in the first data display area in the second data display area on the touch screen display based on the second orientation of the portable electronic device.

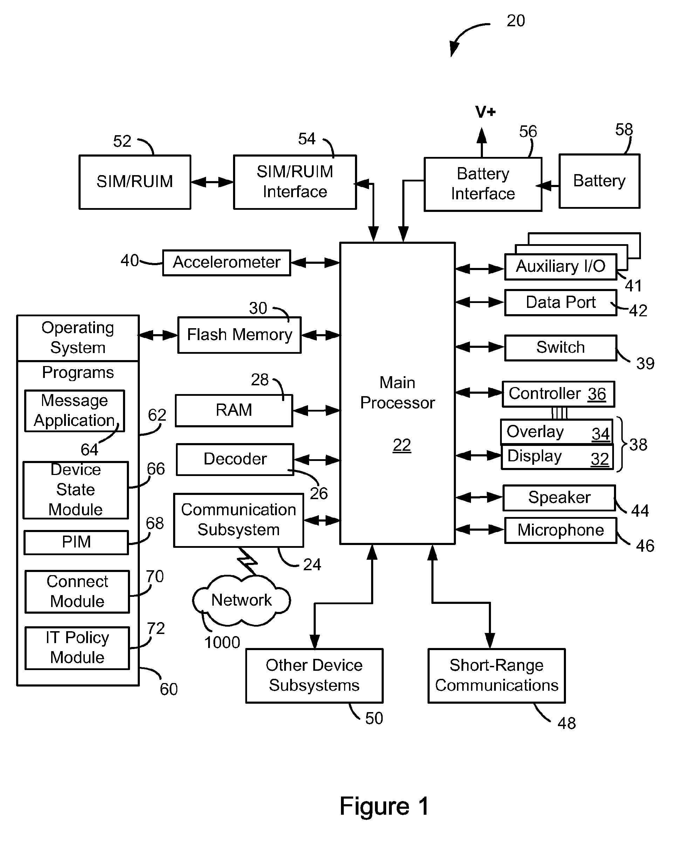

Referring to Figure 1, there is shown therein a block diagram of an example of an embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards, such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with the portable electronic device 20 is a GSM/GPRS wireless network in one example implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36 that together make up a touch screen display 38, a switch 39, an accelerometer 40, an auxiliary input/output (I/O) subsystem 41, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The accelerometer 40 includes a cantilever beam with a proof mass and suitable deflection sensing circuitry. The accelerometer 40 is used for detecting direction of gravitational forces (or gravity-induced reaction forces). Movement of the portable electronic device 20 to alternate orientations is detected and the orientation of the accelerometer 40 and therefore of the portable electronic device 20 can be determined.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 which are described in more detail below. The operating system 60 and the software components 62 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62, such as specific software applications 64, 66, 68, 70 and 72, or parts thereof, may be temporarily loaded into a volatile store such as the RAM 28. Other software components can also be included, as is well known to those skilled in the art.

The subset of software components 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software components 62 can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. The PIM 68 has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The software components 62 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 41, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 41. A subscriber may also compose data items, such as e-mail messages, for example, using the touch-sensitive overlay 34 on the display 32 that are part of the touch screen display 38, and possibly the auxiliary I/O subsystem 41. The auxiliary I/O subsystem 41 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

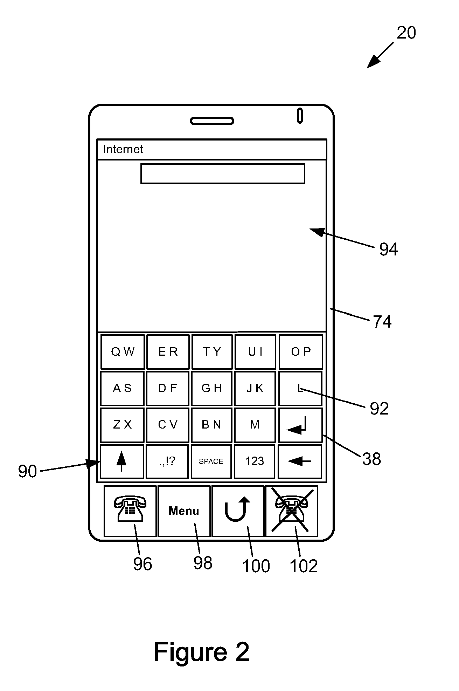

Reference is now made to Figure 2, which shows a front view of an example of a portable electronic device 20 in portrait orientation. The portable electronic device 20 includes a housing 74 that houses the internal components that are shown in Figure 1 and frames the display 32 and the touch-sensitive overlay 34 of the touch screen display 38 such that the display 32 and touch-sensitive overlay 34 of the touch screen display 38 are exposed for user-interaction therewith when the portable electronic device 20 is in use. In the exemple orientation shown in Figure 2, the touch screen display 38 includes a graphical user interface that in the present example is a portrait mode virtual keyboard 90 for user entry of data in the form of, for example, text during operation of the portable electronic device 20. It will be appreciated that such a virtual keyboard may be used for data entry in any suitable application such as in an electronic mail application, during electronic mail composition or in any other suitable application. The portrait mode virtual keyboard 90 of Figure 2 is provided for data entry in an Internet browser application and is shown as a reduced keyboard for the purpose of the present example. The present disclosure is not limited to the portrait mode virtual keyboard 90 shown as other keyboards including other reduced keyboards or full keyboards are possible.

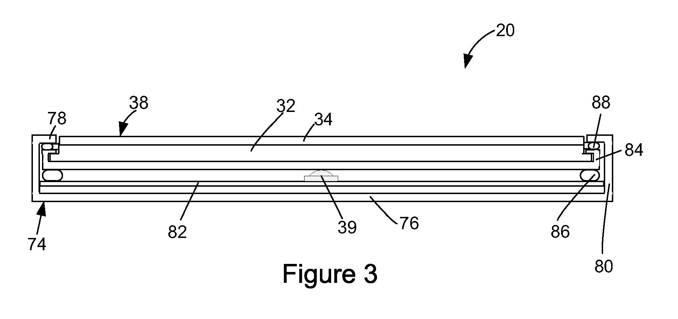

The housing can be any suitable housing for the internal components shown in Figure 1. As best shown in Figure 3, the housing 74 in the present example includes a back 76, a frame 78, which frames the touch screen display 38, sidewalls 80 that extend between and generally perpendicular to the back 76 and the frame 78, and a base 82 that is spaced from and generally parallel to the back 76. The base 82 can be any suitable base and can include, for example, a printed circuit board or flex circuit board. The back 76 includes a plate (not shown) that is releasably attached for insertion and removal of, for example, the battery 58 and the SIM/RUIM card 52 described above. It will be appreciated that the back 76, the sidewalls 80 and the frame 78 can be injection molded, for example. In the example of the portable electronic device 20 shown in Figure 2, the frame 78 is generally rectangular with rounded corners although other shapes are possible.

The display 32 and the touch-sensitive overlay 34 can be supported on a support tray 84 of suitable material such as magnesium for providing mechanical support to the display 32 and touch-sensitive overlay 34. The display 32 and touch-sensitive overlay 34 are biased away from the base 82, toward the frame 78 by biasing elements 86 such as gel pads between the support tray 84 and the base 82. Compliant spacers 88, which can also be in the form of gel pads for example, are located between an upper portion of the support tray 84 and the frame 78. The touch screen display 38 is moveable within the housing 74 as the touch screen display 38 can be moved toward the base 82, thereby compressing the biasing elements 86. The touch screen display 38 can also be pivoted within the housing 74 with one side of the touch screen display 38 moving toward the base 82, thereby compressing the biasing elements 86 on the same side of the touch screen display 38 that moves toward the base 82.

In the present example, the switch 39 is supported on one side of the base 82 which can be printed circuit board while the opposing side provides mechanical support and electrical connection for other components (not shown) of the portable electronic device 20. The switch 39 can be located between the base 82 and the support tray 84. The switch 39, which can be a mechanical dome-type switch, for example, can be located in any suitable position such that displacement of the touch screen display 38 resulting from a user pressing the touch screen display 38 with sufficient force to overcome the bias and to overcome the actuation force for the switch 39, depresses and actuates the switch 39. In the present embodiment the switch 39 is in contact with the support tray 84. Thus, depression of the touch screen display 38 by user application of a force thereto causing actuation of the switch 39 thereby provides the user with a positive tactile feedback during user interaction with the user interface of the portable electronic device 20. The switch 39 is not actuated in the rest position shown in Figure 3, absent applied force by the user. Thus, withdrawal of the applied force on the touch screen display 38 after actuation of the switch 39 causes the switch 39 to return to the rest position. It will now be appreciated that the switch 39 can be actuated by pressing anywhere on the exposed touch screen display 38 to cause movement of the touch screen display 38 in the form of movement parallel with the base 82 or pivoting of one side of the touch screen display 38 toward the base 82. The switch 39 is connected to the processor 22 and can be used for further input to the processor when actuated. Although a single switch is shown any suitable number of switches can be used.

The touch screen display 38 can be any suitable touch screen display such as a capacitive touch screen display. A capacitive touch screen display 38 includes the display 32 and the touch-sensitive overlay 34, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch screen display 38 can be determined. For example, the size and the shape of the touch on the touch screen display 38 can be determined in addition to the location (X and Y values) based on the signals received at the controller 36 from the touch sensor layers.

Referring again to Figure 2, it will be appreciated that a user's touch on the touch screen display 38 is determined by determining the X and Y touch location and user-selected input is determined based on the X and Y touch location and the application executed by the processor 22. In the example of the screen shown in the front view of Figure 2, the application provides the virtual keyboard 90 and the button of the virtual keyboard 90 selected by the user is matched to the X and Y touch location. Thus, the button selected by the user is determined based on the X and Y touch location and the application. In the example shown in Figure 2, the user enters text or any other characters via the virtual keyboard 90, selecting letters from the virtual keyboard 90 by touching the touch screen display at the location of the characters on the virtual keyboard 90.

In the present example, the portable electronic device includes four physical buttons 96, 98, 100, 102 in the housing 74 for user-selection for performing functions or operations including an "off-hook" button 96 for placing an outgoing cellular telephone call or receiving an incoming cellular telephone call, a Menu button 98 for displaying a context-sensitive menu or submenu, an escape button 100 for returning to a previous screen or exiting an application, and an "on-hook" button 102 for ending a cellular telephone call. The remainder of the buttons shown on the face of the example of the portable electronic device of Figure 2 are virtual buttons 92 of the virtual keyboard 90 on the touch screen display 38.

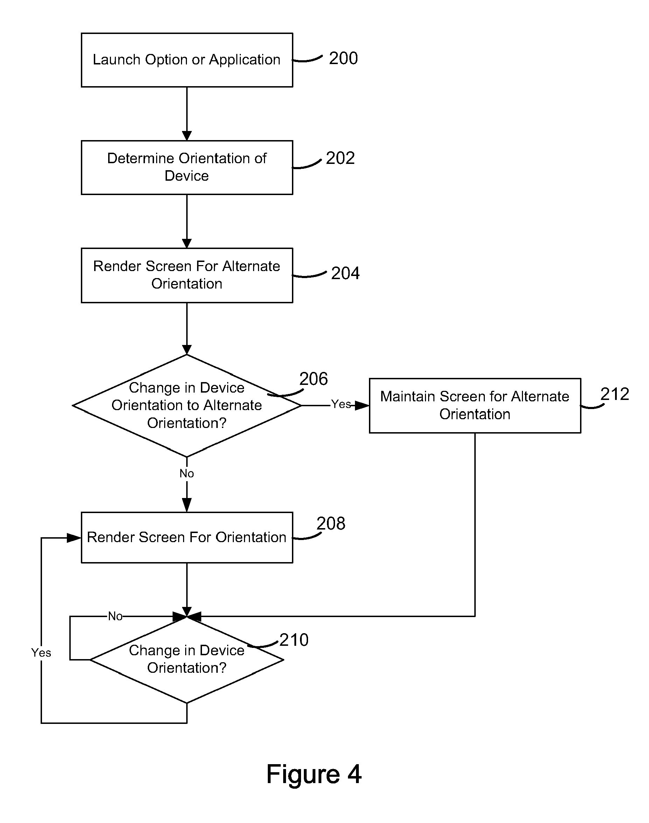

Reference is now made to Figure 4 to describe a method of controlling a portable electronic device in accordance with one embodiment. It will be appreciated that the steps of Figure 4 are carried out by routines or subroutines of software executed by the processor 22. Coding of software for carrying out such steps is well within the scope of a person of ordinary skill in the art having regard to the present description.

The processor 22 receives a user-selection of an application or an option within an application in which a screen that may be a graphical user interface is rendered and the selection option or application is launched (step 200). The orientation of the portable electronic device is determined based on the input from the accelerometer (step 202). Next, a screen is rendered on the display 32. The screen that is rendered is based on the orientation as determined at step 200 and is a screen for an alternate orientation to the orientation determined (step 204). The orientation of the portable electronic device 20 based on the signal from the accelerometer 40 is again determined (step 206) to determine if there is a change in the orientation within a threshold period of time. Thus, it is again determined if the portable electronic device 20 is closest to a portrait orientation or a landscape orientation and, if the orientation is determined to have changed, within a suitable threshold period of time, based on a comparison of the orientation determined at step 206 to the orientation determined previously, the process proceeds to step 212. If, on the other hand, the orientation is determined at step 206 to be the same as that previously determined after the threshold period of time, the process continues to step 208. At step 208, the display 32 is reconfigured as a new screen is rendered for orientation of the portable electronic device 20. If there is a change in the orientation of the portable electronic device 20 after the threshold period of time, this change in orientation is determined at step 210 and the screen for the orientation determined at step 210 is rendered at step 208. If at step 206, a change in the device orientation to the alternate orientation within a suitable threshold period of time is determined, the screen rendered at step 204 is maintained (step 212) and the process proceeds to step 210.

Continued reference is made to Figure 4 to describe an example of the method of controlling a portable electronic device in accordance with one embodiment. As described, the processor 22 receives a user-selection of an application or an option within an application in which a virtual keyboard is rendered for user-entry of data in the form of characters such as alphabetical letters (lower and upper case) and numerals. Such a user selection can be received by user touching the touch screen display 38 for selection of, for example, an Internet browser application, a new email composition option, an add new calendar entry option, or any other suitable application or option. The X and Y location of the touch event are determined and the selected option or application is determined and launched (step 200).

Next, the orientation of the portable electronic device 20 is determined based on input from the accelerometer 40. Thus, it is determined if the portable electronic device 20 is closest to a portrait orientation or a landscape orientation based on the orientation of the accelerometer 40 (step 202).

A graphical user interface including a virtual keyboard is then rendered based on the orientation of the portable electronic device 20 determined from input from the accelerometer 40 (step 204). The orientation of the virtual keyboard that is rendered is dependent on the orientation as determined at step 202 and a virtual keyboard for an alternate orientation to the orientation of the portable electronic device 20 is rendered. Thus, if the portable electronic device 20 is in a landscape mode, a portrait mode virtual keyboard is rendered. Conversely, if the portable electronic device 20 is in a portrait mode, a landscape mode virtual keyboard is rendered. Along with the virtual keyboard, a display area is rendered including a suitable screen displayed for the option or application launched with a data entry field or fields. The orientation of the display area is also dependent on the orientation of the accelerometer determined at step 202. The display area can be rendered, for example, above the virtual keyboard in either the landscape orientation or the portrait orientation.

The orientation of the portable electronic device 20 based on the signal from the accelerometer 40 is again determined (step 206) to determine if there is a change in the orientation within a threshold period of time. Thus, it is again determined if the portable electronic device 20 is closest to a portrait orientation or a landscape orientation based on the orientation of the accelerometer 40 and, if the orientation is determined to have changed, within a suitable threshold period of time, based on a comparison of the orientation determined at step 206 to the orientation determined previously, the process proceeds to step 212. If, on the other hand, the orientation is determined at step 206 to be the same as that previously determined after the threshold period of time, the process continues to step 208.

At step 208, the touch screen display 38 is reconfigured as a new virtual keyboard is rendered based on the orientation of the portable electronic device 20 as determined by the orientation of the accelerometer 40. The orientation of the new virtual keyboard that is rendered is dependent on the orientation of the portable electronic device 20 as determined at steps 202 and 206. Thus, if the portable electronic device 20 is determined to be in the landscape orientation at step 202 and maintained in the landscape orientation for the threshold period of time as determined at step 206, the landscape mode virtual keyboard is rendered. Conversely, if the portable electronic device 20 is determined to be in the portrait orientation at step 202 and maintained in the portrait orientation for a threshold period of time as determined at step 206, the portrait mode virtual keyboard is rendered. A display area is also rendered. The orientation of the display area is again dependent on the orientation of the accelerometer 40 determined at steps 202 and 206.

The portable electronic device 20 can then be used in the orientation as determined at step 206. If there is a change in the device orientation after the threshold period of time, this change in orientation is determined at step 210 and the virtual keyboard for the orientation is rendered at step 208. Thus, if the portable electronic device is in the portrait orientation as determined at step 210, the portrait mode virtual keyboard is rendered at step 208. Conversely, if the portable electronic device 20 is in the landscape orientation as determined at step 210, the landscape mode virtual keyboard is rendered at step 208. The display area is also rendered with the virtual keyboard. It will now be appreciated that the orientation of the portable electronic device 20 is monitored and a change in the orientation after the threshold period of time results in a change in the virtual keyboard rendered such that the associated virtual keyboard for the determined orientation is rendered.

Referring again to step 206, the orientation of the portable electronic device 20 based on the signal from the accelerometer 40 is determined as described. If the orientation is determined to have changed, within a suitable threshold period of time, based on a comparison of the orientation determined at step 206 to the orientation determined previously, the virtual keyboard rendered at step 204 is maintained (step 212) and the process proceeds to step 210.

It will be appreciated from the foregoing description that the virtual keyboard that is rendered is dependent on the orientation. When a user-selection of an application or an option within an application in which a virtual keyboard is rendered for user-entry of data in the form of characters such as alphabetical letters (lower and upper case) and numerals is received, the keyboard for the alternate orientation is first rendered on the touch screen display 38. If there is no change in the orientation of the portable electronic device 20 within a suitable threshold period of time, the touch screen display 38 is reconfigured by rendering the virtual keyboard for the orientation of the portable electronic device 20. On the other hand, if the portable electronic device is reoriented to the alternate orientation within the threshold period time, virtual keyboard first rendered is maintained.

It will be appreciated that the process shown and described with reference to Figure 4 is simplified for the purpose of the present explanation and other steps and substeps may be included.

Reference is still made to Figure 4 and to Figures 2, 5 and 6 to describe a specific example of the method of controlling a portable electronic device 20 in accordance with the embodiment of Figure 4. The present example is provided for better understanding and is not intended to limit the scope of the present disclosure.

According to the present example, the processor 22 receives a user-selection of an Internet browser application for browsing the Internet by, for example, determination of a touch event at an Internet browser icon displayed on the touch screen display 38 (step 200).

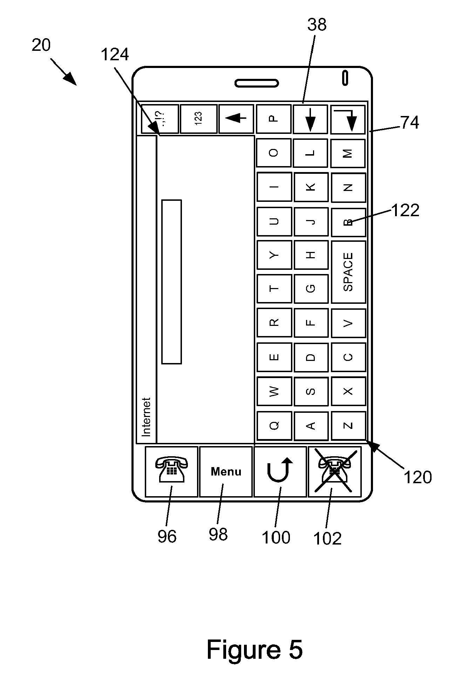

Next, the orientation of the portable electronic device 20 is determined based on input from the accelerometer 40. For the purpose of the present example, the portable electronic device 20 is in the portrait orientation as shown in Figures 2 and 5 (step 202).

The virtual keyboard is then rendered in the landscape mode as shown in Figure 5. In the present example, the landscape mode virtual keyboard 120 is a full QWERTY keyboard on the touch screen display 38 of the portable electronic device 20 in which each alphabetical letter has a respective one of a number of virtual buttons 122 that together make up the landscape mode virtual keyboard 120. The landscape mode virtual keyboard 120 is rendered along with the landscape mode display area 124 (step 204). Although the portable electronic device 20 is held in the portrait orientation as shown in Figure 5, the landscape mode virtual keyboard 120 is rendered. The virtual buttons 122 of the landscape mode virtual keyboard 120 are not rendered upright in the orientation that the portable electronic device 20 is held but, instead, are rendered sideways.

For the purpose of the present example, the portable electronic device 20 is maintained in the portrait orientation and therefore it is determined that there is no change in the orientation within the threshold period of time, which may be any suitable period of time such as, for example, 3 seconds. Thus, it is again determined that the portable electronic device 20 is closest to the portrait orientation based on the orientation of the accelerometer 40 (step 206).

At step 208, the touch screen display 38 is reconfigured as the portrait mode virtual keyboard 90 is rendered based on the orientation of the portable electronic device 20 as determined by the orientation of the accelerometer 40. The portrait mode virtual keyboard 90 in the present example is shown in Figure 2 and is a reduced QWERTY keyboard in which multiple alphabetical letters share the virtual buttons 92 such that ones of the virtual buttons have more than one associated letter. The virtual buttons 92 are rendered with the alphabetical letters and other keyboard buttons displayed in an upright position for use. The portable electronic device 20 can be operated in any suitable mode for determining a user-desired one of the letters upon determination of a touch event on the respective one of the virtual buttons 92. For example, letters can be selected using a multi-tap mode, using a predictive text mode or using any other suitable mode. The portrait mode display area 94 is also rendered with the virtual keyboard 90.

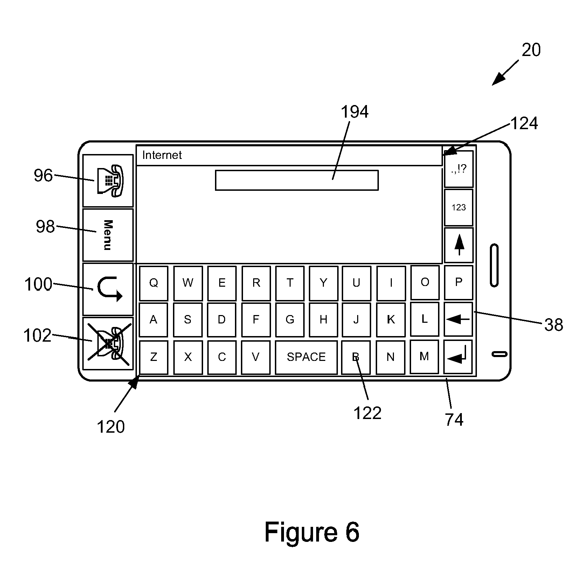

The user can then enter data using the portrait mode keyboard 90. It will be appreciated that a user may choose to turn the portable electronic device 20 to the landscape orientation to provide the landscape mode keyboard 120, as shown in Figure 6, for example, to change from a reduced keyboard to a full keyboard. The orientation of the portable electronic device 20 can be continually monitored and the associated one of the portrait mode virtual keyboard 90 and the landscape mode virtual keyboard 120 rendered if a change is determined (step 210).

Reference is now made to Figure 4 and to Figures 2, 5 and 6 to describe another example of the method of controlling a portable electronic device 20 in accordance with the embodiment of Figure 4. Again, the present example is provided for better understanding and is not intended to limit the scope of the present disclosure.

According to the present example, the processor 22 receives a user-selection of an Internet browser application for browsing the Internet by, for example, determination of a touch event at an Internet browser icon displayed on the touch screen display 38 (step 200).

Next, the orientation of the portable electronic device 20 is determined based on input from the accelerometer 40. For the purpose of the present example, the portable electronic device 20 is in the portrait orientation as shown in Figures 2 and 5 (step 202).

The landscape mode virtual keyboard 120 is then rendered as shown in Figure 5. In the present example, the landscape mode virtual keyboard 120 is a full QWERTY keyboard

For the purpose of the present example, the portable electronic device 20 is then moved by rotating the device about 90 degrees into the landscape orientation within the threshold period of time. It is therefore determined that there is a change in the orientation within the threshold period of time, which again may be any suitable period of time. Thus, it is determined that the portable electronic device 20 is closest to the landscape orientation based on the orientation of the accelerometer 40 (step 206).

The landscape mode virtual keyboard 120 is therefore maintained as shown in Figure 6 (step 212).

The user can then enter data using the landscape mode virtual keyboard 120. It will be appreciated that a user may choose to turn the portable electronic device 20 to the portrait orientation to provide the portrait mode keyboard 90 and portrait mode display area 94, as shown in Figure 2 (step 210).

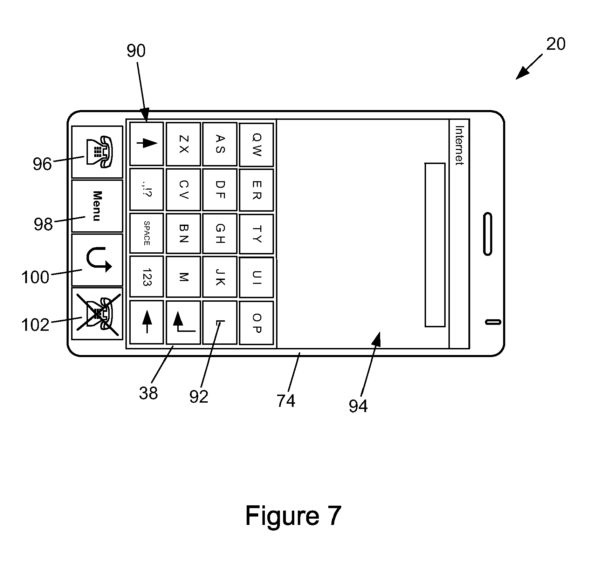

Reference is made to Figure 4 and to Figures 6 and 7 to describe another example of the method of controlling a portable electronic device 20 in accordance with the embodiment of Figure 4. The present example is provided for better understanding and is not intended to limit the scope of the present disclosure.

According to the present example, the processor 22 receives a user-selection of an Internet browser application for browsing the Internet by, for example, determination of a touch event at an Internet browser icon displayed on the touch screen display 38 (step 200).

Next, the orientation of the portable electronic device 20 is determined based on input from the accelerometer 40. For the purpose of the present example, the portable electronic device 20 is in the landscape orientation as shown in Figures 6 and 7 (step 202).

The portrait mode virtual keyboard 90 is rendered along with the portrait mode display area 94 (step 204). Although the portable electronic device 20 is held in the landscape orientation as shown in Figure 7, the portrait mode virtual keyboard 90 is rendered. The virtual buttons 92 of the portrait mode virtual keyboard 90 are not rendered upright in the orientation that the portable electronic device 20 is held but, instead, are rendered sideways.

For the purpose of the present example, the portable electronic device 20 is maintained in the landscape orientation and therefore it is determined that there is no change in the orientation within the threshold period of time, which may be any suitable period of time. Thus, it is again determined that the portable electronic device 20 is closest to the landscape orientation based on the orientation of the accelerometer 40 (step 206).

At step 208, the touch screen display 38 is reconfigured as the landscape mode virtual keyboard 120 is rendered based on the orientation of the portable electronic device 20 as determined by the orientation of the accelerometer 40. The landscape mode display area 124 is also rendered with the landscape mode virtual keyboard 120 as shown in Figure 6.

The user can then enter data using the landscape mode keyboard 120. It will be appreciated that a user may choose to turn the portable electronic device 20 to the landscape orientation to provide the portrait mode virtual keyboard 90, as shown in Figure 2, for example, to change from a reduced keyboard to a full keyboard. The orientation of the portable electronic device 20 can be continually monitored and the associated keyboard rendered if a change is determined (step 210).

Reference is made to Figure 4 and to Figures 2 and 7 to describe another example of the method of controlling a portable electronic device 20 in accordance with the embodiment of Figure 4. The present example is provided for better understanding and is not intended to limit the scope of the present disclosure.

According to the present example, the processor 22 receives a user-selection of an Internet browser application for browsing the Internet by, for example, determination of a touch event at an Internet browser icon displayed on the touch screen display 38 (step 200).

Next, the orientation of the portable electronic device 20 is determined based on input from the accelerometer 40. For the purpose of the present example, the portable electronic device 20 is in the landscape orientation as shown in Figure 7 (step 202).

The portrait mode virtual keyboard 90 is rendered along with the portrait mode display area 94 (step 204). Although the portable electronic device 20 is held in the landscape orientation as shown in Figure 7, the portrait mode virtual keyboard 90 is rendered. The virtual buttons 92 of the portrait mode virtual keyboard 90 are not rendered upright in the orientation that the portable electronic device 20 is held but, instead, are rendered sideways.

For the purpose of the present example, the portable electronic device 20 is moved by rotating the portable electronic device 20 about 90 degrees into the portrait orientation within the threshold period of time. It is therefore determined that there is a change in the orientation within the threshold period of time, which again may be any suitable period of time. Thus, it is determined that the portable electronic device 20 is closest to the portrait orientation based on the orientation of the accelerometer 40 (step 206).

The portrait mode virtual keyboard 90 is therefore maintained as shown in Figure 6 (step 212).

The user can then enter data using the portrait mode virtual keyboard 90.

It will be appreciated that the present disclosure is not limited to the use of the virtual keyboards shown as many other keyboard types are possible including, for example, other reduced keyboards or other full keyboards in either of the orientations.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A method of controlling a portable electronic device comprising a display, the method comprising:
determining a first orientation of the portable electronic device;
rendering a second screen on the display for a second orientation of the portable electronic device when the portable electronic device is in the first orientation; and
reconfiguring the display by rendering a first screen based on the first orientation of the portable electronic device if the portable electronic device is maintained in the first orientation.

2. The method according to claim 1, wherein said display comprises a touch screen display and wherein rendering a second screen comprises rendering a second graphical user interface and wherein rendering a first screen comprises rendering a first graphical user interface.

3. The method according to claim 2, wherein said reconfiguring the display is carried out in response to determining that the portable electronic device is maintained in the first orientation for a threshold period of time.

4. The method according to claim 3, comprising maintaining said second graphical user interface if the portable electronic device is moved to the second orientation within the threshold period of time.

5. The method according to claim 4, comprising rendering the one of the first graphical user interface and the second graphical user interface in response to determining a change in the orientation to the respective one of the first orientation and the second orientation after said threshold period of time.

6. The method according to any one of claims 2 to 5, wherein rendering a second graphical user interface comprises rendering a second virtual keyboard and wherein rendering a first graphical user interface comprises rendering a first virtual keyboard.

7. The method according to claim 6, wherein said first virtual keyboard comprises one of a portrait orientation keyboard and a landscape orientation keyboard and said second virtual keyboard comprises another of the portrait orientation keyboard and the landscape orientation keyboard.

8. The method according to claim 7, wherein the landscape orientation keyboard comprises a full keyboard having a respective virtual button for each alphabetical letter.

9. The method according to claim 7 or claim 8, wherein the portrait orientation keyboard comprises a reduced virtual keyboard.

10. A portable electronic device comprising:
a housing;
a display connected to the housing and ; and
functional components in the housing comprising an accelerometer, a memory device, and a processor operably connected to the display, the accelerometer, and the memory device for executing a program stored in the memory to cause the portable electronic device to implement the steps of the method of any one of claims 1 to 9.

11. A computer-readable medium having computer-readable code embodied therein for execution by a processor in a portable electronic device comprising a display, for causing said portable electronic device to implement the steps of the method of any one of claims 1 to 9.

## Amended claims

### Amended claims in accordance with Rule 137(2) EPC.

**1.** A method of controlling a portable electronic device (20) comprising a display (32), the method comprising:
determining that the portable electronic device (20) is in a first orientation;
rendering a second screen on the display (32) corresponding to a second orientation of the portable electronic device (20) when the portable electronic device (20) is in the first orientation; and
reconfiguring the display (32) by rendering a first screen based on the first orientation of the portable electronic device if the portable electronic device is maintained in the first orientation.

**2.** The method according to claim 1, wherein the display (32) comprises a touch screen display (38) and wherein rendering a second screen comprises rendering a second graphical user interface and wherein rendering a first screen comprises rendering a first graphical user interface.

**3.** The method according to claim 2, wherein the reconfiguring the display (32) is carried out in response to determining that the portable electronic device (20) is maintained in the first orientation for a threshold period of time.

**4.** The method according to claim 3, comprising maintaining the second graphical user interface if the portable electronic device (20) is moved to the second orientation within the threshold period of time.

**5.** The method according to claim 4, comprising rendering the one of the first graphical user interface and the second graphical user interface in response to determining a change in the orientation to the respective one of the first orientation and the second orientation after the threshold period of time.

**6.** The method according to any one of claims 2 to 5, wherein rendering a second graphical user interface comprises rendering a second virtual keyboard and wherein rendering a first graphical user interface comprises rendering a first virtual keyboard.

**7.** The method according to claim 6, wherein the first virtual keyboard comprises one of a portrait orientation keyboard and a landscape orientation keyboard and the second virtual keyboard comprises the other of the portrait orientation keyboard and the landscape orientation keyboard.

**8.** The method according to claim 7, wherein the landscape orientation keyboard comprises a full keyboard having a respective virtual button for each alphabetical letter.

**9.** The method according to claim 7 or claim 8, wherein the portrait orientation keyboard comprises a reduced virtual keyboard.

**10.** A portable electronic device (20) comprising:
a housing (74);
a display (32) connected to the housing (74); and
functional components in the housing (74) comprising an accelerometer (40), a memory device (28, 30), and a processor (22) operably connected to the display (32), the accelerometer (40), and the memory device (28, 30), the memory device (28, 30) having computer-readable code stored therein executable by the processor (22) to cause the portable electronic device (20) to implement the steps of the method of any one of claims 1 to 9.

**11.** A computer-readable medium having computer-readable code embodied therein executable by a processor (22) in a portable electronic device (20) comprising a display (32), to cause the portable electronic device (20) to implement the steps of the method of any one of claims 1 to 9.

**12.** The method according to claim 1, wherein prior to determining that the portable electronic device (20) is in a first orientation, the method comprises launching an application in response to receiving a user-selection.
